(19) **Europäisches Patentamt**
**European Patent Office**
**Office européen des brevets**

(11) **EP 2 738 632 B1**

(12) **EUROPEAN PATENT SPECIFICATION**

(45) Date of publication and mention
of the grant of the patent:
**05.02.2020 Bulletin 2020/06**

(51) Int Cl.:
***G05B 19/042*** *(2006.01)*     ***G05B 17/02*** *(2006.01)*
***G06F 17/50*** *(2006.01)*

(21) Application number: **13195286.3**

(22) Date of filing: **02.12.2013**

(54) **Input output cloning for industrial automation**

Eingabe-Ausgabe-Klonung zur industriellen Automatisierung

Clonage d'entrée/sortie destiné à l'automatisation industrielle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2012 US 201213692884**

(43) Date of publication of application:
**04.06.2014 Bulletin 2014/23**

(73) Proprietor: **Rockwell Automation Technologies,
Inc.
Mayfield Heights, OH 44124 (US)**

(72) Inventors:
• **Maturana, Francisco
Lyndhurst, NJ 44124 (US)**
• **Hall, Kenwood
Hudson, OH 44236 (US)**

(74) Representative: **Grünecker Patent- und
Rechtsanwälte
PartG mbB
Leopoldstraße 4
80802 München (DE)**

(56) References cited:
**JP-A- 2004 038 565**     **US-A1- 2006 167 667**
**US-A1- 2009 299 509**     **US-A1- 2012 232 869**

**Description**

TECHNICAL BACKGROUND

In many industrial environments the quantity and complexity of equipment used requires automation in order to make productive use of the equipment. Automation system design is enhanced by simulation of the operation of the industrial automation processor and inputs and outputs (I/O).

Often timing is very important to the actual operation of the industrial system. A simulation with timing as close to real-time as possible would enhance the design and programming of the industrial system.

US 2006/167667 relates to integrating agents, control logic, and simulations in order to simulate and validate a control strategy for a physical system. The systems and methods integrate agents and control logic with simulations, and utilize the integrated agents, control logic, and simulations to generate a proxy. The proxy can be employed to couple one or more controllers executing the agents and control logic with the simulations. Visualization is utilized to visualize the simulation, including the agents and the control logic. In addition, the systems and methods utilize a synchronization algorithm to synchronize the execution times of the controllers and the simulations. The foregoing mitigates validation through building and testing physical system and/or test beds. Upon validating control strategies, associated agents and logic can be loaded in one or more industrial controllers controlling the physical system, and the simulation can be utilized to represent the physical system.

US 2009/299509 A1 discloses a method and device for simulating a control and/or machine behavior of machine tools or production machines, in which data concerning the machine tools or production machines are transmitted to a simulation device by means of an intranet and/or by means of an internet. The data can be automatically transmitted to the simulation device, whereby particularly after a change in an item of data from the quantity of data, this item of data is transmitted to the simulation device.

JP 2004 038565 A provides a monitoring device of a machine tool which is capable of monitoring the operation and state of a machine tool in real time and quickly specifying an abnormal occurrence position. The monitoring device comprises a signal receiving means for receiving a control signal for operating equipment and a virtual model creation means for creating a virtual model of the equipment based on mechanical element information. A virtual control means controls the virtual model based on the control signal and simulates the operation of the equipment in real time. Said virtual model is displayed three-dimensionally and the state of each part of the equipment is identified by colors.

OVERVIEW

It is the object of the present application to enhance the system design and save time of system design and start-up and troubleshooting of an operational industrial control system.

This object is solved by the subject matter of the independent claims.

Preferred embodiments are defined by the dependent claims.

In various embodiments, methods and systems for creating and running and industrial control system simulation are described herein. The physical I/O and other modules of the industrial control system may be modeled, and specific communication channels may be created by a modeling software module. This may reduce delays within the system and software of the simulation, thereby increasing the likelihood that the timing of the simulation may be more like real-time operation of the industrial control system. Other techniques are described to compensate for these system delays. This may enhance the system design and save time of system design and start-up and troubleshooting of the operational industrial control system.

BRIEF DESCRIPTION OF THE DRAWINGS

Figure 1 illustrates a software system for creating and operating an industrial system simulation.

Figure 2 illustrates an example of a system capable of creating and operating an industrial system simulation.

Figure 3 illustrates a flow chart of a method of for creating an industrial system simulation.

Figure 4 illustrates a block diagram of a computer system configured to operate as a computer in an industrial system simulation.

Figure 5 illustrates a block diagram of a computer system configured to operate as a computer/workstation in an industrial system simulation.

DETAILED DESCRIPTION

Industrial control systems may be large and complex in their size and speed at which they operate. Simulation of the system may be desirable before the system is started up to minimize problems associated with startup and operation of a complex industrial control system.

Simulations using the actual inputs, outputs, and other module from the industrial control system may provide a better simulation, because the actual control system I/O and timing are used. Problems may arise with the timing of the simulation and operation of the actual industrial control system.

The present disclosure describes a method, system, and apparatus for creating and executing a simulation of an industrial control system. The physical I/O of the industrial control system may be modeled, and specific communication channels may be created by a modeling software module during simulation creation. This may increase the likelihood that the timing of the simulation may be more like real-time operation of the industrial control system. This may enhance the system design and save time of system design and start-up and troubleshooting of the operational industrial control system.

In an example, C-code generation is used and the executable is built in a Windows workstation. A multi threaded infrastructure allows the instantiation of a collection of module entries for holding the characteristics of the I/O configuration that are specific to the data type I/O in the industrial control system. The I/O based module entries are registered in a rack based appliance via remote xml execution. The I/O module entries are threaded clones/models of the I/O in the appliance memory. A module entry synchronization kernel permits the coordination of the data transmission between the clones and the server level I/O module entries via a multi channel transmission control protocol and/or user data protocol (TCP/UDP) connection array. The TCP/UDP channels are dynamically formed and independently executed as separate threads. The synchronization kernel uses a channel interface processor (CIP)-based adapter to communicate with the controllers, which could be local to the control system rack or remotely located.

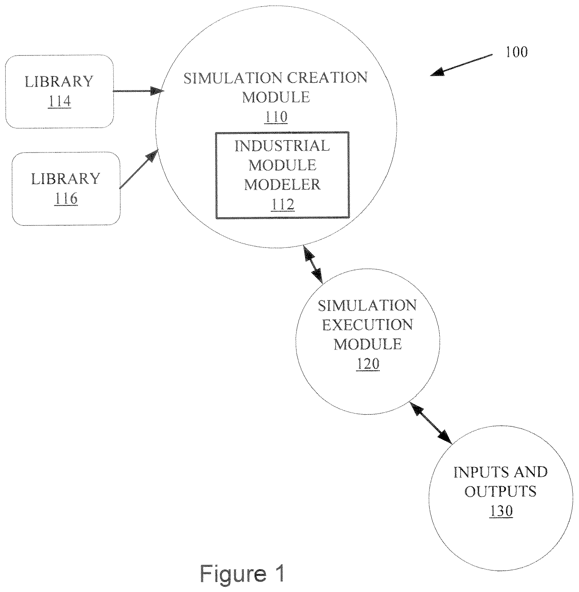

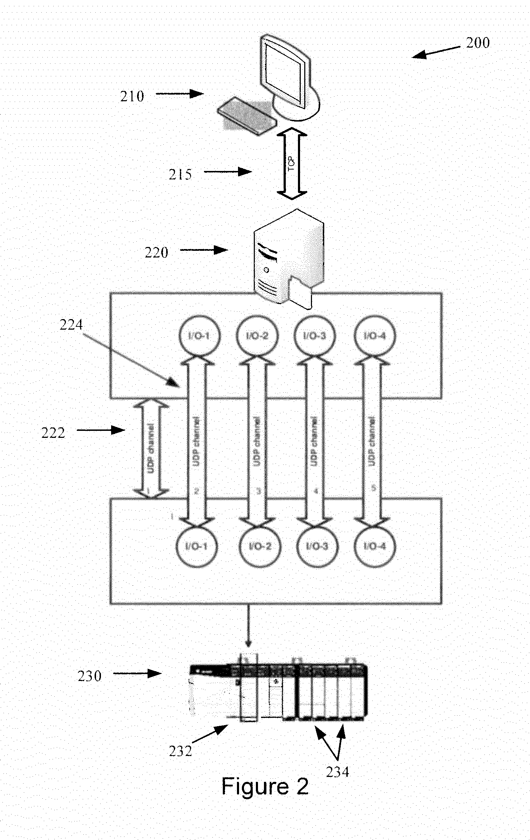

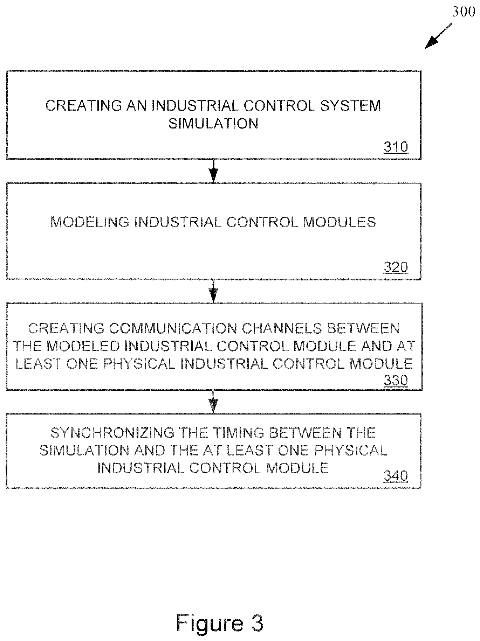

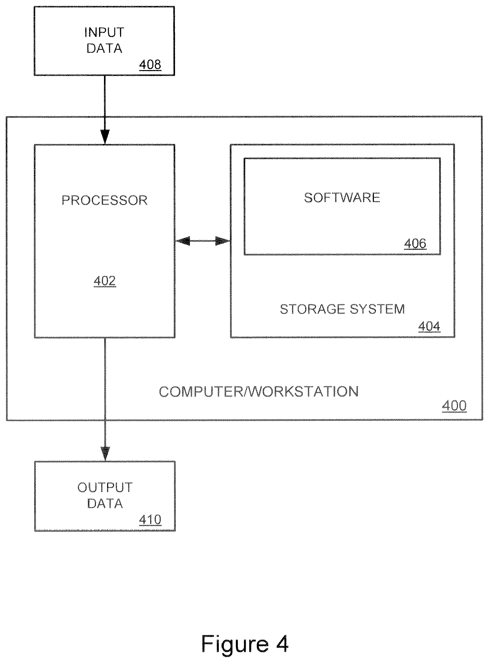

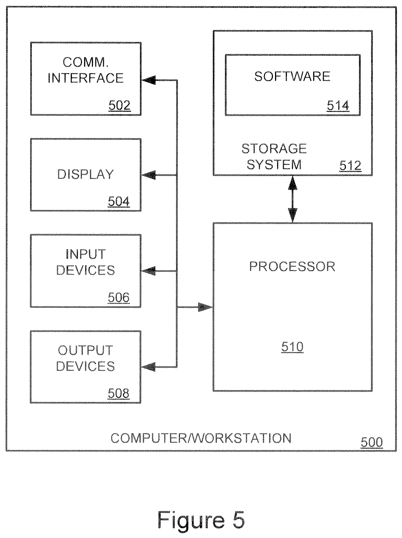

Figure 1 illustrates a software system for creating and operating an industrial system simulation. Figure 2 illustrates an example of a system capable of creating and operating an industrial system simulation. Figure 3 illustrates a flow chart of a method of for creating an industrial system simulation. Figure 4 illustrates a block diagram of a computer system configured to operate as a computer in an industrial system simulation. Figure 5 illustrates a block diagram of a computer system configured to operate as a computer/workstation in an industrial system simulation.

Referring now to Figure 1, illustrated is an example software system 100, which includes modules 110, 120, 130 which, along with libraries 114 and 116, may be configured to accomplish creating and/or operating an industrial system simulation when used with a computing apparatus.

Simulation creation module 110 is capable of creating an industrial control system simulation. The simulation may include modeling and/or cloning industrial control system inputs, outputs, and/or other modules which may be used within and industrial control system.

Simulation creation module 110, includes industrial module modeler 112, which is configured to model inputs, outputs, and other functionality of an industrial control system. Industrial module modeler 112 may include a collection of module entries for holding the characteristics of I/O configuration that are specific to the data type I/O and other modules in the industrial control system. Industrial module modeler 112 may be preconfigured to allow mapping, modeling and/or cloning of the physical modules within the industrial control system.

Industrial module modeler 112 may also create communication channels, within an executable simulation, with the input, output, and other modules within the industrial control modules. These multiple communication channels may enhance the likelihood of synchronization of the simulation with the module in the industrial control system. The I/O module specific configuration and multiple preconfigured communication channels may enhance the legitimacy of the simulation and increase the synchronization of the simulation with the actual inputs, outputs, and other module within the industrial control system.

Simulation creation module 110 may also use libraries 114 and 116 when creating the simulation. Libraries and their use may be somewhat common when software is used to create executable systems. Libraries 114 and 116 may be operable in different operating systems/software systems, such as Windows, Linux, C, C++, etc. The use of a Windows-based operating system and C++ may enable the user to enhance the creation and execution of a simulation using an industrial control system.

Simulation creation module 110 may be used to create and executable program, which is capable of be instantiated/executed by simulation execution module 120. Execution module 120 may receive an executable program from creation module 110, and communicate with inputs and/or outputs 130 of an industrial control system to run the simulation with inputs and/or outputs 130.

In an example, simulation creation module 110 may reside on a Windows workstation where a user may use the workstation and simulation creation module 110 to program/create the simulation executable program. Simulation executable module 120 may reside on another workstation configured to execute/run the executable in cooperation with an industrial control system, which may include inputs and/or outputs 130.

The industrial control system may be a programmable logic controller (PLC)-type system which includes a processor and interchangeable modules for input/outputs and other control system components. The industrial control system may also include a simulation module which may facilitate the running of simulation and communication with the executable program and the industrial control processor and input/output modules.

It will be appreciated that creation module 110 and execution module 120 may be within the same module and reside on the same computer location and/or workstation. Furthermore, these modules and their functionality may be accomplished on any one or combination of the different processors/computers/systems in this nonlimiting example.

Figure 2 illustrates an example system 200 capable of creating and/or operating an industrial system simulation. System 200 includes a workstation 210, an executing workstation 220, and an industrial control system 230. System 200 further includes a communication channel/link 215 capable of transferring communication between workstation 210 and executing workstation 220. Similarly, system 200 includes communications channels 222, and 224 which are capable of carrying communications between executing workstation and industrial control system 230.

Workstation 210 is capable of having software stored therein, which, if executed may enable a user to create and/or operate an industrial system simulation. Workstation 210 may have stored therein the simulation creation module 110, and have access to libraries 114 and 116. A user may use workstation 210 to model/simulate an industrial control system and/or an industrial plant in which the control system is a part. Simulation creation module 110 may then be used to create an executable simulation file/program.

In this example, system 200 also includes an execution workstation 220 communicatively linked to workstation 200 via communication channel 215. Communication channel may be a transmission control protocol (TCP), Internet protocol (IP) connection, or any other wired and/or wireless communication link, capable of allowing communications between the workstations.

Execution workstation 220 receives the executable file/program from workstation 210. Execution workstation 220 includes simulation execution module 120, which is capable of running the simulation.

Execution workstation 220 may also be communicatively linked to industrial control system 230 via one or more communication links 222, 224. Industrial control system 230 includes a processor, input, output, and other modules 234 in a rack mount-type industrial control system.

Industrial control system 230 is programmed using ladder-logic type programming, which is referred to herein as an industrial control program. The industrial control program is typically stored in memory of the industrial control system 230, and executed by the industrial control processor module.

Industrial control system 230 also includes a simulation module 232 which is configured to assist in running the simulation, and communication with execution workstation 220, workstation 210, and/or other system. Simulation module 232 may also include a processor to aid the creation, execution, and/or any other step or process of the communication, creation, execution, or running of the simulation. Simulation module 232 is capable of running/instantiating any of the software described herein, in particular the software described in Figure 1.

In this example communication link 222 is a user data protocol (UDP) channel. Channel 222 may be used for the exchange of data including xml-type I/O configuration information between the executable simulation on executable workstation 220 and industrial control system 230.

Communication link(s) 224 may also be UDP-type communication links, which may be configured to communicate relatively more quickly with the actual, physical I/O and other industrial control modules 234 of the industrial control system 230. Channels 224 are independent UDP channels for the exchange of data between I/O modules and the simulation program.

These specific communication link(s) may increase the likelihood that the timing and/or simulation are closer to the actual running of the industrial control system. This may aid in designing and implementing industrial control systems.

It will be appreciated that portions and/or all of the simulation creation and execution may be accomplished on workstation 210, execution workstation 220, simulation module 232, and/or the processor in industrial control system 230, and/or other processing system. Furthermore, portions and/or all of the simulation creation and execution software may reside on workstation 210, execution workstation 220, simulation module 232, and/or the processor in industrial control system 230, and/or other processing system. One or more of the workstations may be eliminated and all functionality disclosed herein may be accomplished on one or more processors.

Other aspects of the timing of the simulation to be considered in this architecture are the latencies associated with the various communication between the computers and simulation. This includes the latencies induced by the network, between the application running in the workstation and the system simulation, and between the server running the interface program and the backplane of the industrial control system.

The following includes methods of compensating for these timing discrepancies. Synchronization involves a multi-objective optimization problem, where two variables need to be optimized. They are the execution time and the update rate. This leads to the following requirements to be established.

1) $T_{simulation}$ - $T_{appliance}$ ≈ 0, these times are never equal but they get very similar (per simulation node basis)

2) $UR_{Actual}$ - $UR_{Apparent}$ = $UR_{Error}$ = 0, per module entry basis where,

$$UR_{Apparent} = \frac{\frac{1}{m}\sum_{i}^{m} TimestampT_i - \frac{1}{l}\sum_{j}^{l} TimestampP_j}{}$$

, per module entry basis

<u>Conditions for objective 1</u> In an example, the simulation execution speed can be controlled by means of real time interrupts controlling the acceleration rate. Since it is a fixed step simulation, the system can be programmed to wait a couple of cycles to let the controller advance one time step, or the simulation could be run a number of times in a simulation cycle to allow it to "catch up" with the controller's time. To do this a real time timer on the windows workstation is needed. This timer will produce the interrupts for controlling the acceleration rate.

<u>Conditions for objective 2</u> Each module entry will need its update rate adjusted according to a central timestamp observer. So

```
IF UR_Error > 0 THEN
        : decrease module entry's update rate by one half of the total error
ELSE IF UR_Error < 0 THEN
        : increase module entry's update rate by one half of the total error
ELSE
        Do nothing
```

Figure 3 illustrates a flow chart of an example method of synchronizing a simulation and physical inputs, outputs, or other industrial control system modules (300). Various operations of this method may be performed by one or more processing systems, and there is no need to tie any operation to any specific processing system as general purpose computers/processors may be configured to operate as systems capable of performing the operations of the method described herein.

Method 300 includes creating and industrial control system simulation 310, modeling industrial control modules 320, creating communication channels 330, and synchronizing the timing 340. Creating and industrial control system simulation 310 may include using simulation creation module 110. Creating and industrial control system simulation (310) includes modeling industrial control modules 320.

Modeling industrial control modules 320 is accomplished at least in part with industrial module modeler 112. When the simulation is created industrial module modeler 112 is used to create a model/clone of the physical I/O and other modules 234 located in the industrial control system 230. When the model of the I/O is included in the simulation, or when the simulation is instantiated, communication channels are created between the modeled industrial control module in the simulation and the actual industrial control module 234 in industrial control system at step 330.

When the simulation is executed, the created communication channels enhance the synchronization of the timing between the simulation and the physical industrial control modules at 340.

It will be appreciated that portions and/or all of method 300 and related software may be accomplished on workstation 210, execution workstation 220, simulation module 232, and/or the processor in industrial control system 230, and/or other processing system.

Referring now Figure 4, a computer/processor/workstation system 400 and the associated discussion are intended to provide a brief, general description of a suitable computing environment in which the software modules in Figure 1, and the process illustrated in Figure 3 may be implemented. Many other configurations of computing devices and software computing systems may be employed to implement a system for creating and operating an industrial simulation system.

Computer/processor/workstation system 400 may be any type of computing system capable of creating and/or operating an industrial system simulation, such as a server computer, client computer, internet appliance, PLC, rack-type processor, or any combination or variation thereof. Figure 5, discussed in more detail later, provides a more detailed illustration of an example workstation. Indeed, computer/processor/workstation system 400 may be implemented as a single computing system, but may also be implemented in a distributed manner across multiple computing systems. For example, computer/processor/workstation system 400 may be representative of a server system (not shown) with which the computer systems (not shown) running software 401 may communicate to enable computer aided design features. However, computer/processor/workstation system 400 may also be representative of the computer systems that run software 406. Indeed, computer/processor/workstation system 400 is provided as an example of a general purpose computing system that, when implementing software modules in Figure 1, and the process illustrated in Figure 3, becomes a specialized system capable of creating and/or operating an industrial system simulation.

Computer/workstation system 400 includes processor 402, storage system 404, and software 406. Processor 402 is communicatively coupled with storage system 404. Storage system 404 stores simulation software 406 which, when executed by processor 402, directs computer/processor/workstation system 400 to operate as described for the method illustrated in Figure 3 and/or operate the software modules in Figure 1.

Referring still to Figure 4, processor 402 may comprise a microprocessor and other circuitry that retrieves and executes simulation software 406 from storage system 404. Processor 402 may be implemented within a single processing device but may also be distributed across multiple processing devices or sub-systems that cooperate in executing program instructions. Examples of processor 402 include general purpose central processing units, application specific processors, PLC processor modules, simulation module processors, and graphics processors, as well as any other type of processing device.

Storage system 404 may comprise any storage media readable by processor 402 and capable of storing any portion or all of simulation software 406. Storage system 404 may include volatile and nonvolatile, removable and non-removable media implemented in any method or technology for storage of information, such as computer readable instructions, data structures, program modules, or other data. Storage system 404 may be implemented as a single storage device but may also be implemented across multiple storage devices or sub-systems. Storage system 404 may comprise additional elements, such as a controller, capable of communicating with processor 402.

Examples of storage media include random access memory, read only memory, magnetic disks, optical disks, and flash memory, as well as any combination or variation thereof, or any other type of storage media. In some implementations, the storage media may be a non-transitory storage media. In some implementations, at least a portion of the storage media may be transitory. It should be understood that in no case is the storage media a propagated signal.

Simulation software 406 comprises computer program instructions, firmware, or some other form of machine-readable processing instructions, and/or combinations thereof, having at least some portion of software modules in Figure 1, and the process illustrated in Figure 3 embodied therein. Simulation software 406 may be implemented as a single application but also as multiple applications. Simulation software 406 may be a stand-alone application but may also be implemented within other applications distributed on multiple devices, including but not limited to other design software and operating system software.

In general, simulation software 406 may, when loaded into processor 402 and executed, transform processor 402, and computer/processor/workstation system 400 overall, from a general-purpose computing system into a special-purpose computing system customized to aid in the creation, execution, and/or running of the industrial system simulation as described by the software modules in Figure 1, and the process illustrated in Figure 3 and its associated discussion.

Encoding simulation software 406 may also transform the physical structure of storage system 404. The specific transformation of the physical structure may depend on various factors in different implementations of this description. Examples of such factors may include, but are not limited to: the technology used to implement the storage media of storage system 404, whether the computer-storage media are characterized as primary or secondary storage, and the like.

For example, if the computer-storage media are implemented as semiconductor-based memory, simulation software 406 may transform the physical state of the semiconductor memory when the software is encoded therein. For example, simulation software 406 may transform the state of transistors, capacitors, or other discrete circuit elements constituting the semiconductor memory.

A similar transformation may occur with respect to magnetic or optical media. Other transformations of physical media are possible without departing from the scope of the present description, with the foregoing examples provided only to facilitate this discussion.

Through the operation of computer/processor/workstation system 400 employing simulation software 406, transformations are performed on input data 408, resulting in output data 410. As an example, input data 408 could be considered transformed from one state to another by the transformation of various elements of simulation data contained therein.

Computer/processor/workstation system 400 may have additional devices, features, or functionality. Computer/processor/workstation system 400 may optionally have input devices such as a keyboard, a mouse, a voice input device, or a touch input device, and comparable input devices. Output devices such as a display, speakers, printer, and other types of output devices may also be included.

Computer/processor/workstation system 400 may also contain communication connections and devices that allow computer/processor/workstation system 400 to communicate with other devices, such as over a wired or wireless network in a distributed computing and communication environment. These devices are well known in the art and need not be discussed at length here. Examples of computer/processor/workstation system 400 may be a PLC processor, a processor in simulation module 232, workstations 310, and 320.

Figure 5 illustrates a block diagram of a computer system configured to operate as a workstation 500. The software modules in Figure 1, and the process illustrated in Figure 3 may be implemented on one or more workstations 500, as shown in Figure 5. Workstation 500 includes communication interface 502, display 504, input devices 506, output devices 508, processor 510, and storage system 512. Processor 510 is linked to communication interface 502, display 504, input devices 506, output devices 508, and storage system 512. Storage system 512 includes a non-transitory memory device that stores operating software 514.

Communication interface 502 includes components that communicate over communication links, such as network cards, ports, RF transceivers, processing circuitry and software, or some other communication devices. Communication interface 502 may be configured to communicate over metallic, wireless, or optical links. Communication interface 502 may be configured to use TDM, IP, Ethernet, optical networking, wireless protocols, communication signaling, or some other communication format - including combinations thereof.

Display 504 may be any type of display capable of presenting information to a user. Displays may include touch screens in some embodiments. Input devices 506 include any device capable of capturing user inputs and transferring them to workstation 500. Input devices 50 may include a keyboard, mouse, touch pad, or some other user input apparatus. Output devices 508 include any device capable of transferring outputs from workstation 500 to a user. Output devices 508 may include printers, projectors, displays, or some other user output apparatus. Display 504, input devices 506, and output devices 508 may be external to workstation 500 or omitted in some examples.

Processor 510 includes a microprocessor and other circuitry that retrieves and executes operating software 514 from storage system 512. Storage system 512 includes a disk drive, flash drive, data storage circuitry, or some other non-transitory memory apparatus. Operating software 514 includes computer programs, firmware, or some other form of machine-readable processing instructions. Operating software 514 may include an operating system, utilities, drivers, network interfaces, applications, or some other type of software. When executed by processing circuitry, operating software 514 directs processor 510 to operate workstation 500 according to software modules in Figure 1, and the process illustrated in Figure 3.

In this example, workstation 500 executes a number of methods stored as software 514 within storage system 512. The results of the simulation design, creation, and implementation are displayed to a user via display 504, or output devices 508. Input devices 506 allow users to input a variety of data required by the industrial control system simulation.

For example, processor 510 receives input data 408 either from communication interface 502, input devices 506, or storage system 512. Processor 510 then operates on input data 408 to produce output data 410 which may be stored in storage system 512, displayed on display 504, or output through output devices 508.

**Claims**

1. A computer apparatus comprising software that when executed by the computer apparatus directs the apparatus to simulate operation of an industrial system; the software comprising:

   simulation configuration software, that when executed by the computer apparatus directs the apparatus to create a simulation of an industrial control system (310, 230), and a simulation executable file, wherein the simulation configuration software comprises an industrial module modeler (112) software configured to model at least one physical industrial control module (320) for the simulation;
   simulation execution software that when executed by the computer apparatus directs the apparatus to receive the simulation executable file from the simulation creation software, and execute the simulation executable file to run a simulation, wherein the timing between the simulation and the at least one industrial control module is synchronized by optimizing the two variables execution time and update rate per control module;
   communication software that when executed by the computer apparatus directs the apparatus to communicate with the simulation execution software to establish communication links between the simulation and the at least one industrial control module (330), which enhance the synchronization of the timing between the simulation and the at least one physical industrial control module (340); and
   a non-transitory computer readable storage medium having the user simulation configuration software, the simulation execution software, and the communication software stored thereon.

2. The apparatus of claim 1, wherein at least a portion of the simulation configuration software, the simulation execution software, and the communication software is instantiated on a simulation module (232) included in the industrial control system (230)

3. A system for simulation of an industrial automation system, comprising:

   a workstation (210) configured to create a simulation of an industrial control system (310, 230) comprising one or more physical industrial control modules (234), create a simulation executable file based on the simulation, and execute the simulation executable file to run the simulation, wherein the timing between the simulation and the one or more physical industrial control modules (234) is synchronized (340) by optimizing the two variables execution time and update rate per control module;

an industrial control system (230) capable of sending and receiving data related to the running simulation on the workstation (220), and controlling the physical industrial control modules (234) within the industrial control system (230) based at least in part on the running simulation;

wherein the creating the simulation comprises modeling the one or more physical industrial control modules (320, 234) and creating communication links (222, 224) between the modeled industrial control modules and the physical industrial control modules (234), which enhance the synchronization of the timing between the simulation and the physical industrial control modules (340, 234).

4. The system of claim 3, wherein the industrial control system comprises a simulation module configured to send and receive data related to the running simulation.

5. The system of any one of claims 3 to 4, further comprising an execution workstation (220) configured to receive the simulation executable file and execute the simulation executable file to run the simulation, and wherein the industrial control system (230) is configured to send and receive data related to the running simulation on the execution workstation (220).

6. The system of claim 5, wherein the communication between the workstation (210) and executable workstation (220) comprises TCP-type communication.

7. The system of claim 5, wherein the communication between the execution workstation (220) and industrial control system (230) comprises one or more user data protocol-type communication links (222, 224).

8. The system of claim 5, wherein the workstation (210) and the execution workstation (220) comprise Windows-based operating system.

9. A method for creating a simulation of an industrial automation system (230) comprising:

creating (310) a simulation of an industrial control system (230) comprising one or more physical industrial control modules (234) at least in part using a simulation creation module (110) on a computer:

modeling (320) industrial control modules (234) at least in part using the simulation creation module (110) on a computer;creating (330) communication channels (222, 224) between the modeled industrial control modules and the physical industrial control modules (234) at least in part using a simulation execution module (120); and

synchronizing (340) the timing between the simulation and the physical industrial control module (234) at least in part using the simulation execution module (120) by optimizing the two variables execution time and update rate per control module;

wherein the created communication channels (222, 224) enhance the synchronization of the timing between the simulation and the physical industrial control module (234).

10. The method of claim 9, further comprising executing the simulation at least in part using a computer and the physical industrial control module (230), or

wherein the creating (310) a simulation is accomplished at least in part using C++ programming language, or

wherein the modeling (320) is accomplished at least in part using an industrial module modeler (112), or

wherein the creating (330) communication channels (222, 224) is accomplished at least in part using an industrial module modeler (112), or

wherein the creating (310) a simulation is accomplished at least in part using software libraries (114, 116).

**Patentansprüche**

1. Computergerät mit Software, die, wenn sie von dem Computergerät ausgeführt wird, das Gerät anweist, den Betrieb eines industriellen Systems zu simulieren, wobei die Software umfasst:

eine Simulationskonfigurationssoftware, die, wenn sie von dem Computergerät ausgeführt wird, das Gerät anweist, eine Simulation eines Industriesteuerungssystems (310, 230) und eine ausführbare Simulationsdatei zu erstellen, wobei die Simulationskonfigurationssoftware eine konfigurierte Industriemodulmodelliersoftware (112) umfasst, die dazu eingerichtet ist, wenigstens ein physikalisches industrielles Steuermodul (320) für die Simulation zu modellieren;

eine Simulationsausführungssoftware, die, wenn sie von dem Computergerät ausgeführt wird, das Gerät anweist, die ausführbare Simulationsdatei von der Simulationserzeugungssoftware zu empfangen, und die ausführbare Simulationsdatei ausführt, um eine Simulation auszuführen, wobei der Zeitablauf zwischen der Simulation und dem wenigstens einen industriellen Steuermodul synchronisiert wird, indem die beiden Variablen Ausführungszeit und Aktualisierungsrate pro Steuermodul optimiert werden;

eine Kommunikationssoftware, die, wenn sie von dem Computergerät ausgeführt wird, das Gerät anweist, mit der Simulationsausführungssoftware zu kommunizieren, um Kommunikationsverbindungen zwischen der Simulation und dem wenigstens einen industriellen Steuermodul (330) herzustellen, die die Synchronisation der Zeitabstimmung zwischen der Simulation und dem wenigstens einen physikalischen industriellen Steuermodul (340) verbessern; und

ein nichtflüchtiges computerlesbares Speichermedium, auf dem die Benutzersimulationskonfigurationssoftware, die Simulationsausführungssoftware und die Kommunikationssoftware gespeichert sind.

2. Vorrichtung nach Anspruch 1, bei der wenigstens ein Teil der Simulationskonfigurationssoftware, der Simulationsausführungssoftware und der Kommunikationssoftware auf einem Simulationsmodul (232) instanziiert ist, das in dem industriellen Steuersystem (230) enthalten ist.

3. System zur Simulation eines industriellen Automatisierungssystems, umfassend:

eine Arbeitsstation (210), die dazu eingerichtet ist, eine Simulation eines industriellen Steuersystems (310, 230) zu erstellen, das ein oder mehrere physikalische industrielle Steuermodule (234) umfasst, eine ausführbare Simulationsdatei auf der Grundlage der Simulation zu erstellen und die ausführbare Simulationsdatei auszuführen, um die Simulation auszuführen, wobei die Zeitabstimmung zwischen der Simulation und dem einen oder den mehreren physischen industriellen Steuermodulen (234) synchronisiert wird (340), indem die beiden Variablen Ausführungszeit und Aktualisierungsrate pro Steuermodul optimiert werden;

ein industrielles Steuersystem (230), das in der Lage ist, Daten bezüglich der laufenden Simulation auf der Workstation (220) zu senden und zu empfangen und die physikalischen industriellen Steuermodule (234) innerhalb des industriellen Steuersystems (230) wenigstens teilweise auf der Basis der laufenden Simulation zu steuern;

wobei das Erzeugen der Simulation das Modellieren des einen oder der mehreren physischen industriellen Steuerungsmodule (320, 234) und das Erzeugen von Kommunikationsverbindungen (222, 224) zwischen den modellierten industriellen Steuerungsmodulen und den physischen industriellen Steuerungsmodulen (234) umfasst, die die Synchronisation der Zeitabstimmung zwischen der Simulation und den physischen industriellen Steuermodulen (340, 234) verbessern.

4. System nach Anspruch 3, bei dem das industrielle Steuersystem ein Simulationsmodul umfasst, das zum Senden und Empfangen von Daten in Bezug auf die laufende Simulation konfiguriert ist.

5. System nach einem der Ansprüche 3 bis 4, weiterhin umfassend eine Ausführungsarbeitsstation (220), die dazu eingerichtet ist, die ausführbare Simulationsdatei zu empfangen und die ausführbare Simulationsdatei auszuführen, um die Simulation auszuführen, wobei das industrielle Steuersystem (230) dazu eingerichtet ist, Daten in Bezug auf die laufende Simulation auf der Ausführungsarbeitsstation (220) zu senden und zu empfangen.

6. System nach Anspruch 5, bei dem die Kommunikation zwischen der Arbeitsstation (210) und der ausführbaren Arbeitsstation (220) eine Kommunikation vom TCP-Typ umfasst.

7. System nach Anspruch 5, bei dem die Kommunikation zwischen der Ausführungsarbeitsstation (220) und dem Industriesteuerungssystem (230) eine oder mehrere Kommunikationsverbindungen (222, 224) vom Benutzerdatenprotokolltyp umfasst.

8. System nach Anspruch 5, bei dem die Arbeitsstation (210) und die Ausführungsarbeitsstation (220) ein Windows-basiertes Betriebssystem umfassen.

**9.** Verfahren zum Erzeugen einer Simulation eines industriellen Automatisierungssystems (230), umfassend:

Erzeugen (310) einer Simulation eines industriellen Steuerungssystems (230), umfassend ein oder mehrere physikalische industrielle Steuermodule (234), wenigstens teilweise unter Verwendung eines Simulationserstellungsmoduls (110) auf einem Computer:

Modellieren (320) von Industriesteuerungsmodulen (234) wenigstens teilweise unter Verwendung des Simulationserzeugungsmoduls (110) auf einem Computer;

Erzeugen (330) von Kommunikationskanälen (222, 224) zwischen den modellierten industriellen Steuermodulen und den physischen industriellen Steuermodulen (234) wenigstens teilweise unter Verwendung eines Simulationsausführungsmoduls (120); und

Synchronisieren (340) der Zeitabstimmung zwischen der Simulation und dem physischen industriellen Steuermodul (234) wenigstens teilweise unter Verwendung des Simulationsausführungsmoduls (120) durch Optimieren der zwei Variablen Ausführungszeit und Aktualisierungsrate pro Steuermodul;

wobei die erzeugten Kommunikationskanäle (222, 224) die Synchronisation der Zeitabstimmung zwischen der Simulation und dem physischen industriellen Steuermodul (234) verbessern.

**10.** Verfahren nach Anspruch 9, weiterhin umfassend das Ausführen der Simulation wenigstens teilweise unter Verwendung eines Computers und des physischen industriellen Steuermoduls (230) oder

wobei das Erzeugen (310) einer Simulation wenigstens teilweise unter Verwendung von C ++-Programmiersprache ausgeführt wird, oder

das Modellieren (320) wenigstens teilweise unter Verwendung eines Industriemodul-Modellierers (112) bewerkstelligt wird, oder

das Erzeugen (330) von Kommunikationskanälen (222, 224) wenigstens teilweise unter Verwendung eines Industriemodul-Modellierers (112) bewerkstelligt wird, oder

das Erzeugen (310) einer Simulation wenigstens teilweise unter Verwendung von Softwarebibliotheken (114, 116) ausgeführt wird.

## Revendications

**1.** Appareil informatique comprenant un logiciel qui, lorsqu'il est exécuté par l'appareil informatique, amène l'appareil à simuler le fonctionnement d'un système industriel, le logiciel comprenant :

un logiciel de configuration de simulation qui, lorsqu'il est exécuté par l'appareil informatique, amène l'appareil à créer la simulation d'un système de contrôle industriel (310, 230) et un fichier exécutable de simulation, le logiciel de configuration de simulation comprenant un dispositif de modélisation de modules industriels (112) configuré pour modéliser au moins un module physique de contrôle industriel (320) en vue de la simulation,

un logiciel d'exécution de simulation qui, lorsqu'il est exécuté par l'appareil informatique, amène l'appareil à recevoir le fichier exécutable de simulation en provenance du logiciel de création de simulation, et à exécuter le fichier exécutable de simulation pour faire tourner une simulation, le cadencement entre la simulation et le ou les modules de contrôle industriel étant synchronisé en optimisant les deux variables, durée d'exécution et taux de mise à jour, par module de commande,

un logiciel de communication qui, lorsqu'il est exécuté par l'appareil informatique, amène l'appareil à communiquer avec le logiciel d'exécution de simulation afin d'établir des liaisons de communication entre la simulation et le ou les modules de contrôle industriel (330), ce qui améliore la synchronisation du cadencement entre la simulation et le ou les modules physiques de contrôle industriel (340), et

un support non transitoire de stockage pouvant être lu par ordinateur comportant le logiciel de configuration de simulation, le logiciel d'exécution de simulation et le logiciel de communication qui y sont stockés.

**2.** Appareil selon la revendication 1, dans lequel au moins une partie du logiciel de configuration de simulation, du logiciel d'exécution de simulation et du logiciel de communication est instanciée sur un module de simulation (232) inclus dans le système de contrôle industriel (230).

**3.** Système autorisant la simulation d'un système d'automation industrielle, comprenant :

une station de travail (210) configurée pour créer une simulation concernant un système de contrôle industriel (310, 230) comprenant un ou plusieurs modules physiques de contrôle industriel (234), pour créer un fichier exécutable de simulation fondé sur la simulation, et pour exécuter le fichier exécutable de simulation afin de faire tourner la simulation, le cadencement entre la simulation et le ou les modules physiques de contrôle industriel (234) étant synchronisé (340) en optimisant les deux variables durées d'exécution et taux de mise à jour par module de commande,

un système de contrôle industriel (130) pouvant envoyer et recevoir des données se rapportant à la simulation en cours d'exécution sur la station de travail (220) et pouvant piloter les modules physiques de contrôle industriel (234) à l'intérieur du système de contrôle industriel (230) sur la base au moins en partie de la simulation en cours d'exécution,

dans lequel la création de la simulation comprend la modélisation du ou des modules physiques de contrôle industriel (320, 234) et la création de liaisons de communication (222, 224) entre les modules modélisés de contrôle industriel et les modules physiques de contrôle industriel (234), ce qui améliore la synchronisation du cadencement entre la simulation et les modules physiques de contrôle industriel (340, 234).

4. Système selon la revendication 3, le système de contrôle industriel comprenant un module de simulation configuré pour envoyer recevoir des données se rapportant à la simulation en cours d'exécution.

5. Système selon l'une quelconque des revendications 3 à 4, comprenant en outre une station de travail d'exécution (220) configurée pour recevoir le fichier exécutable de simulation et pour exécuter le fichier exécutable de simulation afin de faire tourner la simulation, et le système de contrôle industriel (230) est configuré pour envoyer et recevoir des données se rapportant à la simulation en cours d'exécution sur la station de travail d'exécution (220).

6. Système selon la revendication 5, dans lequel la communication entre la station de travail (210) et la station de travail d'exécution (220) comprend une communication de type protocole TCP.

7. Système selon la revendication 5, dans lequel la communication entre la station de travail d'exécution (220) et le système de contrôle industriel (230) comprend une ou plusieurs liaisons de communication du type protocole de données utilisateur (222, 224).

8. Système selon la revendication 5, dans lequel la station de travail (210) et la station de travail d'exécution (220) comprennent un système d'exploitation sur base Windows.

9. Procédé de création d'une simulation concernant un système d'automation industrielle (230) comprenant :

la création (310) de la simulation d'un système de contrôle industriel (230) comprenant un ou plusieurs modules physiques de contrôle industriel (234) en utilisant au moins en partie un module de création de simulation (110) sur un ordinateur,

la modélisation (320) de modules de contrôle industriel (234) en utilisant au moins en partie le module de création de simulation (110) sur un ordinateur,

la création (330) de canaux de communication (222, 224) entre les modules modélisés de contrôle industriel et les modules physiques de contrôle industriel (234) en utilisant au moins en partie un module d'exécution de simulation (120), et

la synchronisation (340) du cadencement entre la simulation et le module physique de contrôle industriel (234) en utilisant au moins en partie le module d'exécution de simulation (120) en optimisant les deux variables, durée d'exécution et taux de mise à jour par module de commande,

dans lequel les canaux de communication (222, 224) créés améliorent la synchronisation du cadencement entre la simulation et le module physique de contrôle industriel (234) .

10. Procédé selon la revendication 9, comprenant en outre l'exécution de la simulation en utilisant au moins en partie un ordinateur et le module physique de contrôle industriel (230), ou

dans lequel la création (310) d'une simulation est accomplie au moins en partie en utilisant le langage de programmation C++, ou

dans lequel la modélisation (320) est accomplie au moins en partie en utilisant un dispositif de modélisation de modules industriels (112), ou

dans lequel la création (330) de canaux de communication (222, 224) est accomplie au moins en partie en utilisant un dispositif de modélisation de modules industriels (112), ou

dans lequel la création (310) d'une simulation est accomplie au moins en partie en utilisant des bibliothèques logicielles (114, 116).

Figure 1

Figure 2

300

CREATING AN INDUSTRIAL CONTROL SYSTEM
SIMULATION
310

MODELING INDUSTRIAL CONTROL MODULES

320

CREATING COMMUNICATION CHANNELS BETWEEN
THE MODELED INDUSTRIAL CONTROL MODULE AND AT
LEAST ONE PHYSICAL INDUSTRIAL CONTROL MODULE
330

SYNCHRONIZING THE TIMING BETWEEN THE
SIMULATION AND THE AT LEAST ONE PHYSICAL
INDUSTRIAL CONTROL MODULE        340

# Figure 3

Figure 4

Figure 5

**EP 2 738 632 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006167667 A
- US 2009299509 A1
- JP 2004038565 A